# EUROPÄISCHE PATENTANMELDUNG

(11) **EP 0 970 794 A1**
(43) Veröffentlichungstag der Anmeldung: **12.01.2000**
(21) Anmeldenummer: 99111518.9
(22) Anmeldetag: 14.06.1999
(51) Int. Cl.: B29C 45/53, B29C 45/58

(54) **Vorrichtung zum Spritzgiessen von Kunststoffteilen**

(30) Priorität: 09.07.1998 DE 19830802
(71) Anmelder: SIEMENS AKTIENGESELLSCHAFT, 80333 München (DE)
(72) Erfinder: Götzendorfer, Ludwig-Werner, 74906 Bad Rappenau (DE); Lang, Werner, 83022 Rosenheim (DE); Bednarz, Jürgen Prof., 82377 Penzberg (DE); Schmidt, Hans-Friedrich Dr., 82547 Eurasburg (DE)

(57) **Zusammenfassung**

Vor dem Zurückziehen des Kolbens (3) aus dem Zylinder (2) wird der Kolben (3) mittels eines Drehantriebs (4) um einige Grad um seine Längsachse verdreht, wodurch der stirnseitige Anguß (6) von der Zylinderinnenwand gelöst wird und sicher herausgezogen werden kann.

## Beschreibung

Die Erfindung bezieht sich auf eine Vorrichtung zum Spritzgießen von Kunststoffteilen mit einem in einem Zylinder mittels eines Längsantriebs verschiebbaren Kolbens gemäß dem Oberbegriff des Patentanspruchs 1.

Es ist üblich, bei derartigen Spritzgußvorrichtungen den Zylinder an seinem, einer Gießform zugewandten Ende mit einer kegelartigen Verjüngung zur Bildung eines abtrennbaren Angusses zu versehen.

Durch die DE 38 11 814 A1 ist ein Spritz-Form-Vorrichtung bekannt geworden, bei der der Kolben an seiner dem Anguß zugewandten Stirnseite eine schwalbenschwanzartige Vertiefung aufweist, um den Anguß aus der kegelartigen Verjüngung herausziehen zu können. Insbesondere bei Werkstoffen mit erhöhter Haftung kann es dabei geschehen, daß der Anguß aus der schwalbenschwanzartigen Vertiefung herausgerissen wird oder im Bereich der stirnseitigen Kanten abreißt.

Der Erfindung liegt die Aufgabe zugrunde, die Funktionssicherheit der Vorrichtung zu erhöhen.

Diese Aufgabe wird durch eine Vorrichtung mit den Merkmalen des Patentanspruchs 1 gelöst. Unmittelbar vor dem Zurückziehen des Kolbens kann dieser zunächst um einige Grad verdreht werden und damit den Anguß von der Zylinderwand lösen, worauf dieser mit dem Kolben mühelos herausgezogen werden kann.

Im folgenden wird die Erfindung anhand eines in der Zeichnung dargestellten Ausführungsbeispieles näher erläutert.

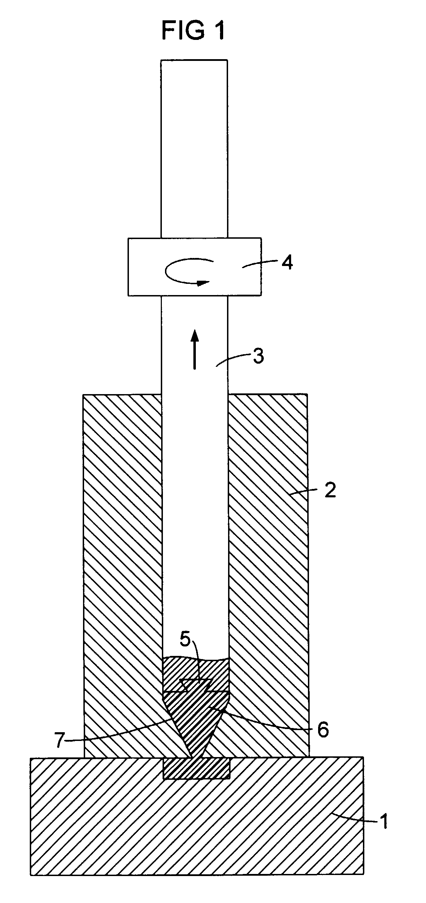

Die dargestellte Figur 1 zeigt schematisiert im Querschnitt eine Vorrichtung zum Spritzgießen von Kunststoffteilen mit einer Gießform 1, einem Zylinder 2, einem Kolben 3 und einem Drehantrieb 4. Der Kolben 3 weist an seinem, der Gießform 1 zugewandten Stirnseite eine schwalbenschwanzförmige Vertiefung 5 auf. Der Zylinder 2 ist zur Gießform 1 hin zur Bildung eines abtrennbaren Angusses 6 mit einer kegelförmigen Verjüngung 7 versehen. Der Kolben 3 ist mittels eines nicht dargestellten Längsantriebs im Zylinder 2 axial verschiebbar.

In der dargestellten Stellung ist der Gießvorgang gerade beendet. Der Zylinder 2 kann nun von der Gießform 1 abgehoben werden, um den zwischen dem Kolbenende und der Gießform 1 ausgebildeten Anguß 6 abreißen zu können. Daraufhin wird zunächst der Kolben 3 um einige Grad um seine Längsachse verdreht. Die schwalbenschwanzartige Vertiefung überträgt diese Drehbewegung auf den Anguß 6, der dadurch von der Zylinderinnenwand gelöst wird. Danach kann der Kolben 3 unter Mitnahme des Angusses 6 aus dem Zylinder herausgezogen werden, ohne daß dabei die Gefahr besteht, daß der Anguß 6 in der kegelartigen Verjüngung haften bleibt und vom Kolbenende gelöst wird.

## Patentansprüche

1. Vorrichtung zum Spritzgießen von Kunststoffteilen mit einem in einem Zylinder (2) mittels eines Längsantriebs verschiebbaren Kolbens (3),
wobei der Zylinder (2) an seinem einer Gießform (1) zugewandten Ende eine kegelartige Verjüngung (7) zur Bildung eines abtrennbaren Angusses (6) aufweist und
wobei der Kolben (3) an seiner dem Anguß zugewandten Stirnseite mit einer schwalbenschwanzartigen Vertiefung (5) versehen ist,
**dadurch gekennzeichnet,**
daß die Vorrichtung einen Drehantrieb (4) für den Kolben aufweist und
daß der Kolben (3) vor dem Zurückziehen mittels des Drehantriebes (4) um seine Längsachse rotierbar ist.
